# EUROPÄISCHE PATENTSCHRIFT

(11) **EP 2 201 724 B1**
(45) Veröffentlichungstag und Bekanntmachung des Hinweises auf die Patenterteilung: **12.06.2013**
(21) Anmeldenummer: 08804734.5
(22) Anmeldetag: 25.09.2008
(51) Int. Cl.: H04L 12/28, H04L 29/12

(54) **IDENTIFIKATION UND/ODER ADRESSIERUNG EINER DATENENDEINRICHTUNG EINES LOKALEN NETZWERKES**
IDENTIFICATION AND/OR ADDRESSING OF A DATA TERMINAL DEVICE OF A LOCAL NETWORK
IDENTIFICATION ET/OU ADRESSAGE D'UN TERMINAL DE TRAITEMENT DE DONNÉES D'UN RÉSEAU LOCAL

(30) Priorität: 25.09.2007 EP 07018849
(43) Veröffentlichungstag der Anmeldung: 30.06.2010
(73) Patentinhaber: Gigaset Communications GmbH, 81379 München (DE)
(72) Erfinder: KRUK, Anton, 46499 Hamminkeln (DE); MÖSKER, Volker, 46419 Isselburg (DE)
(74) Vertreter: Michalski Hüttermann & Partner Patentanwälte
(86) Internationale Anmeldenummer: PCT/EP2008/062837
(87) Internationale Veröffentlichungsnummer: WO 2009/053208

(56) Entgegenhaltungen:
- EP-A- 1 345 381
- US-A1- 2002 040 397

## Beschreibung

Die Erfindung bezieht sich auf ein Verfahren zur Identifikation und/oder Adressierung einer Datenendeinrichtung eines lokalen Netzwerkes gemäß dem Oberbegriff des Patentanspruches 1, ein Endsystem zur Identifikation und/oder Adressierung einer Datenendeinrichtung eines lokalen Netzwerkes gemäß dem Oberbegriff des Patentanspruches 10 und eine Datenendeinrichtung eines lokalen Netzwerkes zur dessen Identifikation und/oder Adressierung gemäß dem Oberbegriff des Patentanspruches 12.

Das Auffinden bzw. die Identifikation/Adressierung von Geräten in einem lokalen Netzwerk, z.B. Telefone in einem Heim-netzwerk, ist bei dynamischer Vergabe von Adress-/Identifikationsinformationen, z.B. IP-Adressen (Internet Protocol), oft ein Problem, da ein Benutzer des Netzwerkes die aktuelle IP-Adresse des Gerätes nicht kennt und diese sich nach jedem Neueinschalten/Neuverbinden mit dem Netzwerk ändern kann. Um aber z.B. ein solches Gerät über eine Webseite z.B. mittels eines browserfähigen Personal Computers konfigurieren zu können, ist die Adressierung aber wichtig und notwendig.

Derzeit gibt es im Prinzip drei bekannte Möglichkeiten, dieses Problem zu lösen:
(I) Das Gerät hat ein Display und kann seine eigene IP-Adresse anzeigen.
(II) Das Gerät gibt durch eine Anfrage, den sogenannten DHCP-Request (Dynamic Host Configuration Protocol), bei einem Server (DHCP-Server) seinen Namen, der vorzugsweise symbolischer Natur ist, bekannt und der DHCP-Server teilt daraufhin diesen Namen einem "Domain Name Server" eines "Domain Name System (DNS)" im lokalen Netzwerk zur Realisierung eines DNS-Service mit.
(III) Das Gerät unterstützt ein UPnP-Profil (Universal Plug and Play) und schickt regelmäßige "Broadcasts". Aufgrund dieser "Broadcasts" ist z.B. ein Personal Computer in der Lage, das Gerät zu identifizieren bzw. zu adressieren.

Die angegebenen Möglichkeiten sind jedoch für kleine Geräte, insbesondere solche ohne Display, recht unbefriedigend, da Lösung (I) für Geräte ohne Display schon grundsätzlich ausscheidet,
Lösung (II) sehr stark davon abhängt, inwieweit ein Gateway/Router als Schnittstelle zwischen dem lokalen Netzwerk und dem großflächigen Netzwerk geeignet ist, diesen Dienst zu unterstützen, und
Lösung (III) einen nicht unerheblichen Implementierungsaufwand mit sich bringt, außerdem recht anspruchsvoll im Sinne von Speicherressourcen ist und darüber hinaus auch noch lizenzpflichtig ist.

Das Dokument US 2002/0040397 A1 beschreibt das Zusammenwirken eines IP-basierten Netzwerksystems mit einem Heim-Netzwerk und ein entsprechendes Kommunikationsverfahren. Dabei weist das Heimnetzwerk einen DHCP-Server und einen Look-up Server auf. Der DHCP-Server weist den Einrichtungen des Heim-Netzwerkes jeweils eine Kennung, z.B, eine IP-Adresse zu, der Look-up-Server registriert die URL des Heimnetzwerks und stellt diese lokal bereit.

Die der Erfindung zugrunde liegende Aufgabe besteht darin, eine Datenendeinrichtung eines lokalen Netzwerkes derart zu identifizieren und/oder zu adressieren, dass Adress-/Identifikationsinformationen der Datenendeinrichtung des lokalen Netzwerkes einem Benutzer des lokalen Netzwerkes auf einfache und komfortable weise zur verfügung gestellt werden.

Diese Aufgabe wird ausgehend von
(i) dem im Oberbegriff des Patentanspruches 1 definierten Verfahren durch die Merkmale im Kennzeichen des Patentanspruches 1,
(ii) dem im Oberbegriff des Patentanspruches 12 definierten Endsystem durch die Merkmale im Kennzeichen des Patentanspruches 12,
(iii) der im Oberbegriff des Patentanspruches 14 definierten Anordnung durch die Merkmale im Kennzeichen des Patentanspruches 14,
(iv) von zumindest einem der Verfahrensansprüche 1 bis 11 durch ein Endsystem gemäß dem Anspruch 13 und
(v) von zumindest einem der Verfahrensansprüche 1 bis 11 durch eine Anordnung gemäß dem Anspruch 15 gelöst.

Die der Erfindung zugrunde liegende Idee besteht darin, dass ein Gerät in einem lokalen Netzwerk durch ein Auslöseereignis, z.B. einen internen/externen "Trigger", sich bei einem Server, der beispielsweise durch die URL "www.mygigaset.com" angegeben ist und sich in einem großflächigen Netzwerk, z.B. dem Internet, befindet, anmeldet und diesem einen Datensatz in Form einer auf das lokale Netzwerk und das großflächige Netzwerk verweisende, z.B. veränderbare, Adress-/Identifikationsinformation, z.B. einer internen und externen IP-Adresse, übermittelt. Dieser übermittelte Datensatz wird von dem Server gespeichert. Möchte nun der Benutzer des lokalen Netzwerkes das Gerät in dem lokalen Netzwerk lokalisieren und z.B. für eine Gerätekonfiguration die IP-Adresse des Gerätes in Erfahrung bringen, so gibt er an einer Datenendeinrichtung des lokalen Netzwerkes, z.B. im Browser seines Personal Computers die URL "www.mygigaset.com" des Servers ein und baut eine Verbindung zu dem Server auf. Die Anfrage des Browsers geht nun an den Server, dieser schaut in seine Datenbank und da der Personal Computer dieselbe externe IP-Adresse hat, wie das Gerät - denn beide befinden sich im selben lokalen Netzwerk, kann der Server nun durch ein einfaches "Redirekt" den Browser auf die interne IP-Adresse des Gerätes verweisen.

Diese erfindungsgemäße Vorgehensweise hat den Vorteil, dass die angegebene URL "www.mygigaset.com" nun in allen Bedienungsanleitungen des Gerätes abgedruckt werden kann, wodurch jeder Benutzer des lokalen Netzwerkes sein Gerät mittels der abgedruckten URL "www.mygigaset.com" auffinden/identifizieren/adressieren kann. Dieses Prinzip funktioniert bei jedem von mehreren Geräten, die in einem lokalen Netzwerk vorhanden sind.

Sollten mehrere Geräte in dem lokalen Netzwerk vorhanden sein, die alle diesen Mechanismus nutzen sollen, so ist es sinnvoll, neben der internen und externen IP-Adresse zusätzliche Daten zur Identifikation zu übertragen, z.B. einen symbolischen Namen (Benutzername und/oder Kennwort), eine MAC-Adresse etc. Diese zusätzliche, vom Server an den Browser bzw. den Personal Computer übermittelte Information kann dann durch den Browser auf einer zwischenseite dargestellt werden, die es dem Benutzer des lokalen Netzwerkes ermöglicht das Gerät auszuwählen, welches er auffinden/identifizieren/adressieren möchte.

vorteilhaft ist auch, dass das Gerät in dem lokalen Netzwerk einen externen IP-Adresswechsel erkennt (weiteres Auslöseereignis) und dann ein Update seiner Anmeldung/Registrierung an den Server schickt. Dies ist aber z.B. bei der Nutzung des Service "Voice over Internet Protocol (VoIP)" durch die Nutzung des STUN-Mechanismus [Simple Traversal of User Datagram Protocol (UDP) over Network Adress Translation (NAT)] gegeben.

Darüber hinaus ist es aus Sicherheitsaspekten von Vorteil, wenn ein Timeout, z.B. ein zeitliches Wiederkehrintervall von 24 Stunden, für den Zugriff auf den Server vorgesehen ist (weiteres Auslöseereignis), gemäß dem das Gerät in dem lokalen Netzwerk ein Update seiner Anmeldung/Registrierung an den Server zu schicken hat.

Weitere vorteilhafte Weiterbildungen der Erfindung sind in den übrigen Unteransprüchen sowie in dem nachfolgenden Ausführungsbeispiel der Erfindung angegeben.

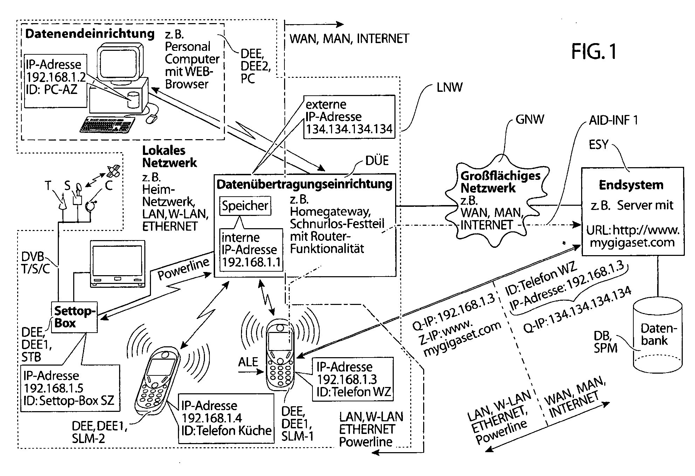

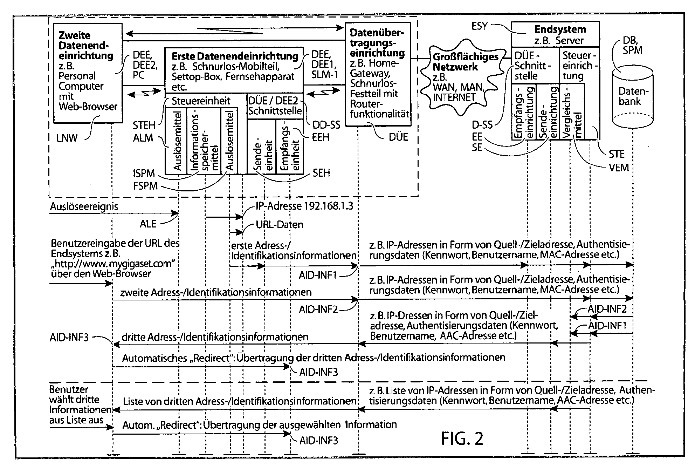

Ein Ausführungsbeispiel der Erfindung wird anhand der FIGUREN 1 und 2 erläutert. Es zeigen:
FIGUR 1 Anordnung/Szenario zum Auffinden, Identifizieren und/oder Adressieren einer Datenendeinrichtung in einem lokalen Netzwerk,
FIGUR 2 Informationsflussdiagramm zum Auffinden, Identifizieren und/oder Adressieren der Datenendeinrichtung in dem lokalen Netzwerk für die Anordnung/das Szenario gemäß der FIGUR 1.

FIGUR 1 zeigt eine Anordnung/ein Szenario zum Auffinden, Identifizieren und/oder Adressieren einer Datenendeinrichtung DEE, DEE1, DEE2 in einem lokalen Netzwerk LNW, das als Local Area Network (LAN), wireless Local Area Network (W-LAN) oder ETHERNET- bzw. Powerline-gestützt aufgebaut sein kann. Das lokale Netzwerk LNW ist vorzugsweise als Heimnetzwerk mit einem beispielsweise als Wide Area Network (WAN), Metropolitan Area Network (MAN) oder INTERNET ausgebildeten, großflächigen Netzwerk GNW gekoppelt, wobei die Kopplung über eine Datenübertragungseinrichtung DÜE des lokalen Netzwerkes LNW erfolgt.

Dem gemäß der FIGUR 1 vorzugsweise als Internet ausgebildeten großflächigen Netzwerk GNW ist z.B. ein als Server mit einem Universal Ressource Locator URL "http://www.mygigaset.com" im großflächigen Netzwerk GNW bezeichnetes Endsystem ESY zugeordnet, das als Speichermittel SPM zur Speicherung von Serverbenutzerdaten eine Datenbank DB aufweist.

Das lokale Netzwerk LNW umfasst neben der Datenübertragungseinrichtung DÜE mehrere Datenendeinrichtungen DEE, DEE1, DEE2 - im dargestellten Ausführungsbeispiel drei erste Datenendeinrichtungen DEE1 und eine zweite Datenendeinrichtung DEE2. Die Datenübertragungseinrichtung DÜE, "Tor" des lokalen Netzwerkes LNW zum Internet und in dieser Funktion vorzugsweise als Home Gateway, Schnurlos-Festteil mit Router-Funktionalität ausgebildet, weist neben den hierfür üblicherweise vorhandenen aber nicht dargestellten Einheiten unter anderem einen Speicher SP zur Speicherung von Adress- und Identifikationsinformationen, z.B. Internetprotokoll-Adressen (IP-Adressen) sowie Authentisierungsdaten wie Kennwort, Benutzername und MAC-Adresse etc., auf.

Von den drei ersten Datenendeinrichtungen DEE1 sind zwei erste Datenendeinrichtungen DEE1 Schnurlos-Mobilteile SLM-1, SLM-2, die mit der Datenübertragungseinrichtung DÜE ein Telefonsystem zum schnurlosen, insbesondere VoIP-basierten (Voice over Internet Protocol) Telefonieren bilden und eine weitere erste Datenendeinrichtung DEE1 als Setup-Box ausgebildet, die in Verbindung mit der Datenübertragungseinrichtung DÜE (schnurlos oder leitungsgebunden) und einem Fernsehapparates FA ein IP-TV-System bildet. Darüber hinaus ist die Settop-Box je nach Ausgestaltung auch für den Empfang von terrestrischen, satelliten- oder kabel-gestützten DVB-Signalen (Digital Video Broadcast) geeignet.

Neben den aufgezählten Geräten können auch beliebig andere Geräte als erste Datenendeinrichtungen DEE1 in dem lokalen Netzwerk LNW angeordnet und über die Datenübertragungseinrichtung DÜE mit dem Internet verbunden sein. So z.B. eine Fax-Gerät, ein Druckgerät, ein Fernsehapparat, eine HIFI-Anlage, ein schurgebundenes Telefon etc..

Die zweite Datenendeinrichtung DEE2, vorzugsweise als ein Personal Computer, ein Notebook bzw. Laptop oder ein "Personal Digital Assistant (PDA)" mit jeweils einem Web-Browser ausgebildet, hat über die Datenübertragungseinrichtung DÜE schnurlosen oder schnurgebundenen Zugriff auf das großflächige Netzwerk GNW bzw. ins Internet und damit auf das Endsystem ESY bzw. den Server. Der Zugriff ins Internet und insbesondere auf das Endsystem ESY erfolgt bekanntermaßen dadurch, dass der Benutzer der zweiten Datenendeinrichtung DEE2 über eine nicht dargestellte Bedienoberfläche, z.B. Tastatur, Touch Panel etc., einen "Universal Resource Locator (URL)", so z.B die URL "http://www.mygigaset.com", im Web-Browser eingibt.

In dem lokalen Netzwerk LNW sind den Datenendeinrichtungen DEE und der Datenübertragungseinrichtung DÜE für die interne und externe "Internet Protocol (IP)"-basierte Kommunikation Adressen, sogenannte IP-Adressen, und gegebenenfalls zur besseren Identifizierung und Authentifizierung bei mehreren Datenendeinrichtungen in dem lokalen Netzwerk als Identitäten bzw. Kennungen ID ausgebildete Identifizierungs-/Authentifizierungsdaten, wie z.B. die bereits angesprochenen Kennworte, Benutzernamen, MAC-Adressen etc., zugewiesen. Sowohl die IP-Adressen als auch die Kennungen ID sind - wie bei der Datenübertragungseinrichtung DÜE - in adäquaten Speichern (in der FIGUR bis auf den Personal Computer nicht explizit dargestellt) abgelegt. Eine mögliche Verteilung der IP-Adressen und Kennungen ID innerhalb des lokalen Netzwerkes LNW in dem dargestellten Szenario sieht folgendermaßen aus:

### Datenübertragungseinrichtung

Interne IP-Adresse 192.168.1.1
Externe IP-Adresse 134.134.134.134

### Erste Datenendeinrichtung (Schnurlos-Mobilteil SLM-1)

IP-Adresse 192.168.1.3
ID: Telefon WZ (Wohnzimmer)

### Erste Datenendeinrichtung (Schnurlos-Mobilteil SLM-2)

IP-Adresse 192.168.1.4
ID: Telefon Küche

### Erste Datenendeinrichtung (Settop-Box STB)

IP-Adresse 192.168.1.5
ID: Settop-Box SZ (Schlafzimmer)

### Zweite Datenendeinrichtung (Personal Computer PC)

IP-Adresse 192.168.1.2
ID: PC-AZ (Arbeitszimmer)

Möchte der Betreiber/Benutzer des lokalen Netzwerkes LNW nun das Schnurlos-Mobilteil SLM-1 mit Hilfe des Personal Computers PC konfigurieren, so benötigt er hierfür die ihm gegebenenfalls nicht bekannte IP-Adresse, weil diese veränderbar ist - z.B. nach jedem Neueinschalten/Neuverbinden mit dem Netzwerk, und die Kennung ID des Schnurlos-Mobilteils SLM-1.

Das Schnurlos-Mobilteil SLM-1 verhält sich jetzt im Sinne der Erfindung und übermittelt dem dem großflächigen Netzwerk GNW zugeordneten Server ESY aufgrund eines Auslöseereignisses ALE über das Schnurlos-Festteil bzw. dem Home Gateway DÜE Adress-/Identifikationsinformationen, im Folgenden als erste Adress-/Identifikationsinformationen AID-INF1 bezeichnet. Die ersten Adress-/Identifikationsinformationen AID-INF1 umfassen bei der Übermittlung auf lokaler Netzwerkseite im Wesentlichen eine Quell-IP-Adresse "Q-IP: 192.168.1.3", die Kennung "ID: Telefon WZ" und eine Ziel-IP-Adresse "Z-IP: www.mygigaset.-com" und auf großflächiger Netzwerkseite die Quell-IP-Adresse des Schnurlos-Festteils bzw. Home Gateway "Q-IP: 134.134.-134.134" hinter der sich die Quell-IP-Adresse "Q-IP: 192.-168.1.3" und die Kennung "ID: Telefon WZ" verbergen.

Das Auslöseereignis wird vorzugsweise durch eine Erstregistrierung des Schnurlos-Mobilteils SLM-1 in dem lokalen Netzwerk LNW bei dem Server ESY, ein zeitliches Wiederkehrintervall im Zuge eines Registrierungsupdate des Schnurlos-Mobilteils SLM-1 in dem lokalen Netzwerk LNW bei dem Server ESY und/oder Änderung der ersten Adress-/Identifikationsinformationen AID-INF1 bestimmt.

FIGUR 2 zeigt ein Informationsflussdiagramm zum Auffinden, Identifizieren und/oder Adressieren der Datenendeinrichtung DEE in dem lokalen Netzwerk LNW für die Anordnung/das Szenario gemäß der FIGUR 1. Die hierfür notwendigen Informationsflüsse (a),(b),(c) verlaufen gemäß der FIGUR 2
(a) zwischen der ersten Datenendeinrichtung DEE1 bzw. dem Schnurlos-Mobilteil SLM-1 und der mit der ersten Datenendeinrichtung DEE1 bzw. dem Schnurlos-Mobilteil SLM-1 schnurlos oder schurgebunden verbundenen Datenübertragungseinrichtung bzw. dem Schnurlos-Festteil DÜE und dem mit der Datenübertragungseinrichtung bzw. dem Schnurlos-Festteil DÜE über das großflächige Netzwerk GNW verbundenen Endsystem bzw. Server ESY,
(b) zwischen der zweiten Datenendeinrichtung DEE2 bzw. dem Personal Computer PC und der mit der zweiten Datenendeinrichtung DEE2 bzw. dem Personal Computer PC schnurlos oder schurgebunden verbundenen Datenübertragungseinrichtung bzw. dem Schnurlos-Festteil DÜE und dem mit der Datenübertragungseinrichtung bzw. dem Schnurlos-Festteil DÜE über das großflächige Netzwerk GNW verbundenen Endsystem bzw. Server ESY und
(c) zwischen der zweiten Datenendeinrichtung DEE2 bzw. dem Personal Computer PC und der ersten Datenendeinrichtung DEE1 bzw. dem Schnurlos-Mobilteil SLM-1.

Die für die Darstellung der Informationsflüsse berücksichtigten Baueinheiten oder Komponenten der ersten Datenendeinrichtung DEE1 bzw. dem Schnurlos-Mobilteil SLM-1 und dem Endsystem bzw. Server ESY sind
(i) für die erste Datenendeinrichtung DEE1 bzw. das Schnurlos-Mobilteil SLM-1 eine Steuereinheit STEH mit zugeordneten Auslösemitteln ALM, Informationsspeichermitteln ISPM und einem zugeordneten Festspeichermodul FSPM sowie eine zwischen der Datenübertragungseinrichtung bzw. dem Schnurlos-Festteil DÜE und der ersten Datenendeinrichtung DEE1 bzw. dem Schnurlos-Mobilteil SLM-1 wirksame, gemeinsame DÜE/DEE2-Schnittstelle DD-SS mit einer zugeordneten Sendeeinheit SEH und einer zugeordneten Empfangseinheit EEH, die in der dargestellten Weise miteinander verbunden sind, und
(ii) für das Endsystem bzw. den Server ESY mit dem zugeordneten Speichermittel SPM bzw. der zugeordneten Datenbank DB eine Steuereinrichtung STE mit zugeordneten Vergleichsmitteln VGM sowie eine zur Datenübertragungseinrichtung bzw. zum Schnurlos-Festteil DÜE wirksame DÜE-Schnittstelle D-SS mit einer zugeordneten Sendeeinrichtung SE und einer zugeordneten Empfangseinrichtung EE, die in der dargestellten Weise miteinander verbunden sind.

Der Informationsfluss (a) beginnt damit, dass in der ersten Datenendeinrichtung DEE1 bzw. dem Schnurlos-Mobilteil SLM-1 von der Auslösemitteln ALM der Steuereinheit STEH das in Bezug auf die FIGUR 1 erwähnte Auslöseereignis ALE erfasst wird bzw. festgestellt wird, ob das Auslöseereignis ALE vorliegt. Ist dieses der Fall, so werden daraufhin von der Steuereinheit STEH sowohl die in dem Informationsspeichermittel ISPM hinterlegte, der ersten Datenendeinrichtung DEE1 bzw. dem Schnurlos-Mobilteil SLM-1 bislang aktuell zugewiesene IP-Adresse, z.B. die IP-Adresse 192.168.1.3 gemäß der FIGUR 1, als auch die in dem Festspeichermodul FSPM gespeicherten, auf das Endsystem bzw. den Server ESY verweisenden URL-Daten ausgelesen und an die Sendeeinheit SEH weitergegeben. Für den Fall, dass in dem Informationsspeichermittel ISPM auch eine Kennung ID, z.B. die Kennung ID "ID:Telefon WZ" gemäß der FIGUR 1 hinterlegt ist, so wird auch diese von der Steuereinheit STEH ausgelesen und an die Sendeeinheit SEH weitergegeben.

Danach werden die IP-Adresse und ggf. die Kennung ID als die Quell-IP-Adresse und die URL-Daten als die Ziel-IP-Adresse von der Sendeinheit SEH zur Datenübertragungseinrichtung bzw. zum Schnurlos-Festteil DÜE übertragen, wo sie im Wesentlichen zusammen mit der Quell-IP-Adresse "Q-IP: 134.134.134.134" der Datenübertragungseinrichtung bzw. dem Schnurlos-Festteil DÜE die ersten Adress-/Identifikationsinformationen AID-INF1 bilden, die von der Datenübertragungseinrichtung bzw. dem Schnurlos-Festteil DÜE dem Endsystem bzw. dem Server ESY übermittelt werden. Im Endsystem bzw. Server ESY werden die ersten Adress-/Identifikationsinformationen AID-INF1 über die Empfangseinrichtung EE und die Steuereinrichtung STE in der Datenbank DB bzw. in dem Speichermittel SPM gespeichert. Damit ist der Informationsfluss (a) beendet.

Beim Informationsfluss (b) wird zunächst von dem Benutzer/Betreiber des lokalen Netzwerkes LNW an der zweiten Datenendeinrichtung DEE2 bzw. dem Personal Computer PC über die Bedienoberfläche, z.B. Tastatur, im Web-Browser die URL "http://www.mygigaset.com" des Endsystems bzw. Servers ESY eingegeben, um von der zweiten Datenendeinrichtung DEE2 bzw. dem Personal Computer PC aus auf das Endsystem bzw. den Server ESY zuzugreifen.

Für diesen Zugriff werden zusätzlich zu diesen URL-Daten unsichtbar für den Benutzer/Betreiber also im Hintergrund, aus einem Speicher der zweiten Datenendeinrichtung DEE2 bzw. des Personal Computer PC die der zweiten Datenendeinrichtung DEE2 bzw. dem Personal Computer PC bislang aktuell zugewiesene IP-Adresse, z.B. die IP-Adresse 192.168.1.2 gemäß der FIGUR 1, und für den Fall, dass in dem Speicher auch eine Kennung ID, z.B. die Kennung ID "ID:PC-AZ" gemäß der FIGUR 1 hinterlegt ist, auch diese ausgelesen.

Danach werden - wie beim Informationsfluss (a) - die IP-Adresse und ggf. die Kennung ID als die Quell-IP-Adresse und die URL-Daten als die Ziel-IP-Adresse zur Datenübertragungseinrichtung bzw. zum Schnurlos-Festteil DÜE übertragen, wo sie im Wesentlichen zusammen mit der Quell-IP-Adresse "Q-IP: 134.134.134.134" der Datenübertragungseinrichtung bzw. dem Schnurlos-Festteil DÜE zweite Adress-/Identifikationsinformationen AID-INF2 bilden, die von der Datenübertragungseinrichtung bzw. dem Schnurlos-Festteil DÜE dem Endsystem bzw. dem Server ESY übermittelt werden. Im Endsystem bzw. Server ESY werden nun auch die zweiten Adress-/Identifikationsinformationen AID-INF2 über die Empfangseinrichtung EE und die Steuereinrichtung STE in der Datenbank DB bzw. in dem Speichermittel SPM gespeichert.

Mit den übertragenen zweiten Adress-/Identifikationsinformationen AID-INF2 wird dem Endsystem bzw. dem Server ESY entweder direkt - durch die zweiten Adress-/Identifikationsinformationen AID-INF2 selbst - oder indirekt - durch eine den zweiten Adress-/Identifikationsinformationen AID-INF2 hinzugefügte Mitteilungsinformation - mitgeteilt, dass das Endsystem bzw. der Server ESY der zweiten Datenendeinrichtung DEE2 bzw. dem Personal Computer PC dritte Adress-/Identifikationsinformationen AID-INF3 übermitteln soll, die angeben welche Datenendeinrichtungen DEE mit welchen IP-Adressen und ggf. Kennungen ID ebenfalls zu dem lokalen Netzwerk LNW gehören - es werden also Datenendeinrichtungen in dem lokalen Netzwerk LNW identifiziert.

Von der Steuereinrichtung STE des Endsystems bzw. Servers ESY werden deshalb sämtliche in der Datenbank DB gespeicherten ersten Adress-/Identifikationsinformationen AID-INF1 und die zweiten Adress-/Identifikationsinformationen AID-INF2 ausgelesen und in die der Steuereinrichtung STE zugeordneten Vergleichsmittel VGM geladen.

Die Vergleichsmittel VGM vergleichen jeweils die ersten Adress-/Identifikationsinformationen AID-INF1 mit den zweiten Adress-/Identifikationsinformationen AID-INF2. Da die ersten und zweiten Adress-/Identifikationsinformationen AID-INF1, AID-INF2 jeweils einen identischen Informationsteil, insbesondere die URL-Daten und die externe IP-Adresse der Datenübertragungseinrichtung DÜE, und einen unidentischen Informationsteil, insbesondere die IP-Adresse und ggf. die Kennung ID der Datenendeinrichtung, haben, werden als Vergleichergebnis aus den unidentischen Informationsteilen der ersten Adress-/Identifikationsinformationen AID-INF1 dritte Adress-/Identifikationsinformationen AID-INF3 erzeugt, die im Sinne des angegebenen Identifizierungsaspekt dem entsprechen, was der zweiten Datenendeinrichtung DEE2 bzw. dem Server PC übermittelt werden soll.

Je nachdem, ob es nun einzige erste Adress-/Identifikationsinformationen AID-INF1 oder mehrere erste Adress-/Identifikationsinformationen AID-INF1 gibt, werden der zweiten Datenendeinrichtung DEE2 bzw. dem Personal Computer PC einzige dritte Adress-/Identifikationsinformationen AID-INF3 und mehrere, gelistete dritte Adress-/Identifikationsinformationen AID-INF3 über die Datenübertragungseinrichtung bzw. das Schnurlos-Festteil DÜE übermittelt. Damit ist der Informationsfluss (b) beendet.

Der Informationsfluss (c) besteht jetzt nur noch darin, dass die zweite Datenendeinrichtung DEE2 bzw. der Personal Computer PC mit den übermittelten dritten Adress-/Identifikationsinformationen AID-INF3 im Sinne eines automatischen "Redirect" eine Verbindung zu der zu den dritten Adress-/Identifikationsinformationen AID-INF3 korrespondierenden ersten Datenendeinrichtung DEE1 bzw. dem Schnurlos-Mobilteil SLM-1 aufbaut - es also adressiert - und der ersten Datenendeinrichtung DEE1 bzw. dem Schnurlos-Mobilteil SLM-1 über die Empfangseinheit EEH die dritten Adress-/Identifikationsinformationen AID-INF3 überträgt. Nachdem die erste Datenendeinrichtung DEE1 bzw. das Schnurlos-Mobilteil SLM-1 also identifiziert und adressiert worden ist, kann es jetzt beispielsweise, wie eingangs erwähnt, von der zweiten Datenendeinrichtung DEE2 bzw. dem Personal Computer PC aus konfiguriert werden.

Bei den gelisteten dritten Adress-/Identifikationsinformationen AID-INF3 müssen vom Benutzer zunächst dritte Adress-/Identifikationsinformationen AID-INF3 aus der Liste ausgewählt werden, bevor - wie vorstehend ausgeführt - von der zweiten Datenendeinrichtung DEE2 bzw. dem Personal Computer PC aus eine Verbindung zu der zu den ausgewählten dritten Adress-/Identifikationsinformationen AID-INF3 korrespondierenden ersten Datenendeinrichtung aufgebaut und diese dann auch wieder konfiguriert werden kann. Damit ist der Informationsfluss (c) beendet.

## Patentansprüche

1. Verfahren zur Identifikation und/oder Adressierung einer Datenendeinrichtung (DEE1) eines lokalen Netzwerkes (LAN, W-LAN, Ethernet, Powerline), bei dem das lokale Netzwerk (LAN, W-LAN, Ethernet, Powerline) über eine Datenübertragungseinrichtung (DÜE) mit einem großflächigen Netzwerk (WAN, MAN, INTERNET) gekoppelt wird und mindestens zwei Datencndeinrichtungen (DEE1, DEE2) des lokalen Netzwerkes (LAN, W-LAN, Ethernet, Powerline) als "Client" über die Datenübertragungseinrichtung (DÜE) mit einem dem großflächigen Netzwerk (WAN, MAN, INTERNET) zugeordneten_Endsystem (ESY) als "Server" verbunden werden, wobei das Verfahren folgende Schritte aufweist:
a) zumindest eine erste Datenendeinrichtung (DEE1) übermittelt aufgrund eines Auslöseereignisses (ALE) vorhandene oder mittels einer Quell-IP-Adresse (Q-IP:134.134.134.134) der Datenübertragungseinrichtung (DÜE) gebildete, auf das lokale Netzwerk (LAN, W-LAN, Ethernet, Powerline) und das großflächige Netzwerk (WAN, MAN, INTERNET) verweisende erste Adress-/Identifikationsinformationen (AID-INF1) an das Endsystem (ESY), das die übermittelten Adress-/Identifikationsinformationen (AID-INF1) speichert,
b) eine zweite Datenendeinrichtung (DEE2) übermittelt vorhandene oder mittels einer Quell-IP-Adresse (Q-IP-134.134.134.134) der Datenübertragungseinrichtung (DÜE) gebildete, auf das großflächige Netzwerk (WAN, MAN, INTERNET) verweisende zweite Adress-/Identifikationsinformationen (AID-INF2) an das Endsystem (ESY), mit denen dem Endsystem (ESY) mitgeteilt wird, dritte Adress-/Identifikationsinformationen (AID-INF3) für das lokale Netzwerk (LAN, W-LAN, Ethernet, Powerline) zu ermitteln und diese an die zweite Datenendeinrichtung (DEE2) zu übertragen,
c) zur Ermittlung der dritten Adress-/Identifikationsinformationen (AID-INF3) das Endsystem (ESY) die empfangenen zweiten Adress-/Identifikationsinfornationen (AID-INF2) mit den gespeicherten ersten Adress-/Identifikationsinformationen (AID-INF1) vergleicht,
d) das Endsystem (ESY), wenn der Vergleich ergibt, dass zu den zweiten Adress-/Identifikationsinformationen (AID-INF2) ein korrespondierender Teil der gespeicherten ersten Adress-/Identifikationsinformationen (AID-INF1) existiert, den auf das lokale Netzwerk (LAN, W-LAN, Ethernet, Powerline) zurückgehenden Teil der ersten Adress-/Identifikationsinformationen (AID-INF1) als die zu ermittelnden dritten Adress-/Identifikationsinformationen (AID-INF3) an die zweite Datenendeinrichtung (DEE2) überträgt,
e) mit dem als die dritten Adress-/Identifikationsinformationen (AID-INF3) übertragenen Teil der ersten Adress-/Identifikationsinformationen (AID-INF1) die zweite Datenendeinrichtung (DEE2) in der Lage ist, direkt mit der ersten Datenendeinrichtung (DEE1) zu kommunizieren.

2. Verfahren nach Anspruch 1, ***dadurch gekennzeichnet, dass*** das Auslöseereignis (ALE) durch eine Erstregistrierung der ersten Datenendeinrichtung (DEE1) in dem lokalen Netzwerk (LAN, W-LAN, Ethernet, Powerline) bei dem Endsystem (ESY) bestimmt wird.

3. Verfahren nach Anspruch 1 oder 2, ***dadurch gekennzeichnet, dass*** das Auslöseereignis (ALE) durch ein zeitliches Wiederkehrintervall im Zuge eines Registrierungsupdate der ersten Datenendeinrichtung (DEE1) in dem lokalen Netzwerk (LAN, W-LAN, Ethernet, Powerline) bei dem Endsystem (ESY) bestimmt wird.

4. Verfahren nach Anspruch 1, 2 oder 3, ***dadurch gekennzeichnet, dass*** das Auslöseereignis (ALE) durch die Änderung der ersten Adress-/Identifikationsinformationen (AID-INF1) bestimmt wird.

5. Verfahren nach Anspruch 1, ***dadurch gekennzeichnet, dass*** Internet Protokoll Adressen in Form von Quell-/Zieladresse und Authentisierungsdatenals die ersten bis dritten Adress-/Identifikationsinformationen (AID-INF1, AID-INF2, AID-INF3) benutzt werden.

6. Verfahren nach Anspruch 5, ***dadurch gekennzeichnet, dass*** ein Kennwort, ein Benutzername oder eine MAC-Adresse als die ersten bis dritten Adress-/Identifikationsinformationen (AID-INF1, AID-INF2, AID-INF3) benutzt werden.

7. Verfahren nach Anspruch 1, ***dadurch gekennzeichnet, dass*** das lokale Netzwerk (LAN, W-LAN, Ethernet, Powerline) leitungslos aufgebaut wird.

8. Verfahren nach Anspruch 7, ***dadurch gekennzeichnet, dass*** ein Schnurlos-Festteil mit Router-Funktionalität als die Datenübertragungseinrichtung (DÜE) benutzt wird.

9. Verfahren nach Anspruch 1, ***dadurch gekennzeichnet, dass*** das lokale Netzwerk (LAN, W-LAN, Ethernet, Powerline) leitungsgebunden aufgebaut wird.

10. Verfahren nach Anspruch 9, ***dadurch gekennzeichnet, dass*** Zum leitungsgebundenen Aufbau ein "Home Gateway" als die Datenübertragungseinrichtung (DÜE) benutzt wird.

11. Verfahren nach Anspruch 1, ***dadurch gekennzeichnet, dass*** ein Web-Server mit einer benutzerspezifischen Datenbank in dem als Internet ausgebildeten großflächigen Netzwerk (WAN, MAN, INTERNET) als das Endsystem (ESY) benutzt wird.

12. Endsystem (ESY) zur Identifikation und/oder Adressierung einer Datenendeinrichtung (DEE1) eines lokalen Netzwerkes (LAN, W-LAN, Ethernet, Powerline) mit einer DÜE-Schnittstelle (D-SS) zu einer Datenübertragungseinrichtung (DÜE) des lokalen Netzwerkes (LAN, W-LAN, Ethernet, Powerline), wobei das einem großflächigen Netzwerk (WAN, MAN, INTERNET) zugeordnete, als "Server" ausgebildete Endsystem (ESY) über die DÜE-Schnittstelle (D-SS) und die Datenübertragungseinrichtung (DÜE) mit mindestens zwei als "Client" ausgebildeten Datenendeinrichtungen (DEE1, DEE2) des lokalen Netzwerkes (LAN, W-LAN, Ethernet, Powerline) verbindbar ist, wobei
a) eine Empfangseinrichtung (EE) der DÜE-Schnittstelle (D-SS) sowie eine Steuereinrichtung (STE) mit zugeordneten Speichermitteln (SPM) vorhanden sind, die derart ausgebildet und miteinander verbunden sind, dass
a1) vorhandene oder mittels einer Quell-IP-Adresse (Q-IP: 134.134.134.134) der Datenübertragungseinrichtung (DÜE) gebildete, auf das lokale Netzwerk (LAN, W-LAN, Ethernet, Powerline) und das großflächige Netzwerk (WAN, MAN, INTERNET) verweisende, von einer ersten Datenendeinrichtung (DEE1) aufgrund eines Auslöseereignisses (ALE) gesendete erste Adress-/Identifikationsinformationen (AID-INF1) empfangen und in den Speichermitteln (SPM) gespeichert werden und
a2) vorhandene oder mittels einer Quell-IP-Adresse (Q-IP:134.134,134.134) der Datenübertragungseinrichtung (DÜE) gebildete, auf das großflächige Netzwerk (WAN, MAN, INTERNET) verweisende, von einer zweiten Datenendeinrichtung (DEE2) gesendete zweite Adress-/Identifikationsinformationen (AID-INF2) empfangen und in den Speichermitteln (SPM) zur Ermittlung von dritten Adress-/Identifikationsinformationen (AID-INF3) für das lokale Netzwerk (LAN, W-LAN, Ethernet, Powerline) und Übermittlung dieser an die zweite Datenendeinrichtung (DEE2) temporär zwischengespeichert gespeichert werden,
b) zur Ermittlung der dritten Adress-/Identifikationsinformationen (AID-INF3) eine Sendeeinrichtung (SE) der DÜE-Schnittstelle (D-SS) sowie die Steuereinrichtung (STE) mit den zugeordneten Speichermitteln (SPM) und Vergleichsmitteln (VGM) vorhanden sind, die derart ausgebildet und miteinander verbunden sind, dass
b1) die empfangenen zwischengespeicherten zweiten Adress-/Identifikationsinformationen (AID-INF2) mit den gespeicherten ersten Adress-/Identifikationsinformationen (AID-INF1) vergleichen werden,
b2) wenn der Vergleich ergibt, dass zu den zweiten Adress-/Identifikationsinformationen (AID-INF2) ein korrespondierender Teil der gespeicherten ersten Adress-/Identifikationsinformationen (AID-INF1) existiert, der auf das lokale Netzwerk (LAN, W-LAN, Ethernet, Powerline) zurückgehende Teil der ersten Adress-/Identifikationsinformationen (AID-INF1) als die zu ermittelnden dritten Adress-/Identifikationsinformationen (AID-INF3) an die zweite Datenendeinrichtung (DEE2) übertragen werden, damit diese in der Lage ist, direkt mit der ersten Datenendeinrichtung (DEE1) zu kommunizieren.

13. Endsystem (ESY) zur Identifikation und/oder Adressierung einer Datenendeinrichtung (DEE1) eines lokalen Netzwerkes (LAN, W-LAN, Ethernet, Powerline) nach Anspruch 12, das zur Durchführung der Verfahrensschritte nach einem der Verfahrensansprüche 1 bis 11 ausgebildet ist.

14. Anordnung zur Identifkation und/oder Adressierung einer Datenendeinrichtung (DEE1) eines lokalen Netzwerks (LAN, W-LAN, Ethernet, Powerline), die das lokale Netzwerk (LAN, W-LAN, Ethernet, Powerline) aufweist, wobei diese Datenendeinrichtung (DEE1) mittels einer DÜE/DEE2-Schnittstelle (DD-SS) mit einer Datenübertragungseinrichtung (DÜE) und einer weiteren Datenendeinrichtung (DEE2) des lokalen Netzwerkes (LAN, W-LAN, Ethernet, Powerline) verbunden ist, wobei die als "Client" ausgebildete Datenendeinrichtung (DEE1) über die DÜE/DEE2-Schnittstelle (DD-SS) mit der weiteren als "Client" ausgebildeten Datenendeinrichtung (DEE2) des lokalen Netzwerkes (LAN, W-LAN, Ethernet, Powerline) sowie über die DÜE/DEE2-Schnittstelle (DD-SS) und die Datenübertragungseinrichtung (DÜE) mit einem als "Server" ausgebildete Endsystem (ESY) der Anordnung verbunden ist, wobei das Endsystem (ESY) einem großflächigen Netzwerk (WAN, MAN, INTERNET) zugeordnet ist, wobei
eine Sendeeinheit (SEH) und eine Empfangseinheit (EEH) der DÜE/DEE2-Schnittstelle (DD-SS) sowie eine Steuereinheit (STEH) mit zugeordneten Auslösemitteln (ALM) und Informationsspeichermittel (ISPM) sowie einem zugeordneten Festspeichermodul (FSPM) vorhanden sind, die derart ausgebildet und miteinander verbunden sind, dass aufgrund eines von den Auslösemitteln (ALM) festgestellten Auslöseereignisses (ALE) vorhandene oder mittels einer Quell-IP-Adresse (Q-IP: 134.134.134.134) der Datenübertragungseinhehtung (DÜE) gebildete, auf das lokale Netzwerk (LAN, W-LAN, Ethernet, Powerline) und das großflächige Netzwerk (WAN, MAN, INTERNET) verweisende in den Informationsspeichermitteln (ISPM) gespeicherte, erste Adress-/Identifikationsinformationen (AID-INF1) an das durch in dem Festspeichermodul (FSPM) gespeicherte "Universal Ressource Locator"-Daten adressierbare Endsystems (ESY) gesendet werden, damit die weitere Datenendeinrichtung (DEE2) - nachdem diese ihrerseits vorhandene oder mittels einer Quell-IP-Adresse (Q-IP; 134. 134. 134. 134) der Datenübertragungseinriehtung (DÜE) gebildete, auf das großflächige Netzwerk (WAN, MAN, WINTER-NET) verweisende zweite Adress/Identifikationsinformationen (AID-INF2) an das Endsystem (ESY) gesendet und im Gegenzug aufgrund eines Vergleiches zwischen den ersten Adress-/Identifikationsinformationen (AID-INF1) und den zweiten Adress-/Identifikationsinformationen (AID-INF2) dritte Adress-/Identifikationsinformationen (AID-INF3) als einen auf das lokale Netzwerk (LAN, W-LAN, Ethernet, Powerline) zurückgehende Teil der ersten Adress-/Identifikationsinformationen (AID-INF1) erhalten hat - in der Lage ist, direkt über die Empfangseinheit (EEH) und die Steuereinheit (STEH) mit der Datenendeinrichtung (DEE1) zu kommunizieren.

15. Anordnung nach Anspruch 14, die zur Durchführung der Verfahrensschritte nach einem der Verfahrensansprüche 1 bis 11 ausgebildet ist.

## Claims

1. Method for identifying and/or addressing a data terminal (DEE1) of a local network (LAN, WLAN, Ethernet, Powerline), wherein the local network (LAN, WLAN, Ethernet, Powerline) is coupled to a wide area network (WAN, MAN, INTERNET) over a data transmission means (DÜE) and at least two data terminals (DEE1, DEE2) of the local network (LAN, WLAN, Ethernet, Powerline) are connected as a "client" over the data transmission means (DÜE) to an end system (ESY) as a "server" which is associated to the wide area network (WAN, MAN, INTERNET), wherein the method comprises the following steps:
a) at least a first data terminal (DEE1) based on a trigger event (ALE) transmits first address/identification information (AID-INF1), which exists or is created by means of a source IP address (Q-IP: 134.134.134.134) of the data transmission means (DÜE) and refer to the local network (LAN, WLAN, Ethernet, Powerline) and the wide area network (WAN, MAN, INTERNET) to the end system (ESY) which stores the transmitted address/identification information (AID-INF1);
b) a second data terminal (DEE2) transmits second address/identification information (AID-INF2), which exists or is created by means of a source IP address (Q-IP: 134.134.134.134) of the data transmission means (DÜE) and refers to the wide area network (WAN, MAN, INTERNET) to the end system (ESY) and by means of which the end system (ESY) is informed to determine third address/identification information (AID-INF3) for the local network (LAN, WLAN, Ethernet, Powerline) and to transmit it to the second data terminal (DEE2);
c) for determining the third address/identification information (AIF-INF3) the end system (ESY) compares the received second address/identification information (AID-INF2) with the stored first address/identification information (AID-INF1);
d) if the comparison result indicates that a part of the stored first address/identification information (AID-TNF1) corresponding to the second address/identification information (AID-INF2) exists, the end system (ESY) transmits the part of the first address/identification information (AID-INF1) arising from the local network (LAN, WLAN, Ethernet, Powerline) as the third address/identification information (AID-INF3) to be determined to the second data terminal (DEE2);
e) based on the part of the first address/identification information (AID-INF1) transmitted as the third address/identification information the second data terminal (DEE2) is enabled to communicate directly with the first data terminal (DEE1).

2. Method according to claim 1, **characterized in that** the trigger event (ALE) is determined by a first registration of the first data terminal (DEE1) in the local network (LAN, WLAN, Ethernet, Powerline) at the end system (ESY).

3. Method according to claim 1 or 2, **characterized in that** the trigger event (ALE) is determined by a temporal recurrence interval in the course of a registration update of the first data terminal (DEE1) in the local network (LAN, WLAN, Ethernet, Powerline) at the end system (ESY).

4. Method according to claim 1, 2 or 3, **characterized in that** the trigger event (ALE) is determined by a change of the first address/identification information (AID-INF1).

5. Method according to claim 1, **characterized in that** internet protocol addresses in the form of source/target address and authentication data are used as the first to third address/identification information (AID-INF1, AIF-INF2, AID-INF3).

6. Method according to claim 5, **characterized in that** a password, a user name or a MAC address are used as the first to third address/identification informations (AID-INF1, AIF-INF2, AID-INF3).

7. Method according to claim 1, **characterized in that** the local network (LAN, WLAN, Ethernet, Powerline) is configured wireless.

8. Method according to claim 7, **characterized in that** a cordless fixed part having a router functionality is used as the data transmission means (DÜE).

9. Method according to claim 1, **characterized in that** the local network (LAN, WLAN, Ethernet, Powerline) is configured wire-bound.

10. Method according to claim 9, **characterized in that** for the wire-bound configuration a "home gateway" is used as the data transmission means (DÜE).

11. Method according to claim 1, **characterized in that** a web server comprising a user specific data bank is used as the end system (ESY) in the wide area network (WAN, MAN, INTERNET) configured as the internet.

12. End system (ESY) for identifying and/or addressing a data terminal (DEE1) of a local network (LAN, WLAN, Ethernet, Powerline) comprising a DÜE interface (D-SS) to a data transmission means (DÜE) of the local network (LAN, WLAN, Ethernet, Powerline), wherein the end system (ESY) configured as a "server" and associated to a wide area network (WAN, MAN, INTERNET) can be connected over the DÜE interface (D-SS) and the data transmission means (DÜE) to at least two data terminals (DEE1, DEE2) of the local network (LAN, WLAN, Ethernet, Powerline) configured as a "client", wherein
a) a reception means (EE) of the DÜE interface (D-SS) as well as a control means (STE) including associated memory means (SPM) are provided, which are configured and connected to each other such that
a1) first address/identification information (AID-INF1), which exists or is created by means of a source IP address (Q-IP:134.134.134.134) of the data transmission means (DÜE) and refers to the local network (LAN, WLAN, Ethernet, Powerline) and the wide area network (WAN, MAN, INTERNET) and is transmitted based on a trigger event (ALE) from a first data terminal (DEE1), is received and stored into the memory means (SPM), and
a2) second address/identification information (AID-INF2), which exists or is created by means of a source IP address (Q-IP:134,134.134.134) of the data transmission means (DÜE) and refers to the wide area network (WAN, MAN, INTERNET) and is transmitted from a second data terminal (DEE2), is received and buffered temporarily in the memory means (SPM) for determining third address/identification information (AID-INF3) for the local network (LAN, WLAN, Ethernet, Powerline) and transmitting this information to the second data terminal (DEE2),
b) for determining the third address/identification information (AIF-INF3) a transmission means (SE) of the DÜE interface (D-SS) as well as the control means (STE) comprising the associated memory means (SPM) and comparing means (VGM) are provided, which arc configured and connected to each other such that
b1) the received and buffered second address/identification information (AID-INF2) is compared with the first address/identification information (AID-INF1);
b2) if the comparison indicates in that a part of the stored first address/identification information (AID-INF1) corresponding to the second address/identification information (AID-INF2) exists, the part of the first address/identification information (AID-INF1) arising from the local network (LAN, WLAN, Ethernet, Powerline) is transmitted to the second data terminal (DEE2) as the third address/identification information (AID-INF3) to be determined in order to enable the second data terminal to communicate with the first data terminal (DEE1).

13. End system (ESY) for identifying and/or addressing a data terminal (DEE1) of a local network (LAN, WLAN, Ethernet, Powcrline) according to claim 12 which is configured to perform the process steps according to any one of the method claims 1 to 11.

14. Arrangement for identifying and/or addressing a data terminal (DEE1) of a local network (LAN, WLAN, Ethernet, Powerline) comprising the local network (LAN, WLAN, Ethernet, Powerline), wherein the data terminal (DEE1) is connected to a data transmission means (DÜE) and a further data terminal (DEE2) of the local network (LAN, WLAN, Ethernet, Powerline) by means of a DÜE/DEE2 interface (DD-SS), wherein the data terminal (DEE1) configured as a "client" is connected to the further data terminal (DEE2) of the local network (LAN, WLAN, Ethernet, Powerline) configured as a "client" over the DÜE/DEE2 interface (DD-SS) and to an end system (ESY) of the arrangement configured as a "server" over the DÜE/DEE2 interface (DD-SS) and the data transmission means (DUE), wherein
the end system (ESY) is associated to a wide area network (WAN, MAN, INTERNET), wherein
a transmission means (SEH) and a reception means (EEH) of the DÜE/DEE2 interface (DD-SS) and a control means (STEH) comprising associated trigger means (ALM) and information storage means (ISPM) and an associated non-volatile memory module (FSPM) are provided, which are configured and connected to each other such that first address/identification information (AID-INF1), which exists or is created by means of a source IP address (Q-IP:134.134.134.134) of the data transmission means (DÜE) and refers to the local network (LAN, WLAN, Ethernet, Powcrline) and the wide area network (WAN, MAN, INTERNET) and is stored in the information memory means (ISPM), is transmitted based on a trigger event (ALE) determined by the trigger means (ALM) to the end system (ESY), which is addressable by "Universal Ressource Locator" data stored in the non-volatile memory module (FSPM) in order to enable the further data terminal (DEE2) - after it has transmitted second address/identification information (AID-INF2) to the end system (ESY), which exists or is created by means of a source IP address (Q-IP:134.134.134.134) of the data transmission means (DÜE) and refers to the wide area network (WAN, MAN, INTERNET), and in response thereto based on a comparison between the first address/identification information (AID-INF1) and the second address/identification information (AID-INF2) has obtained third address/identification information (AID-INF3) as a part of the first address/identifcation information (AID-INF1) arising from the local network (LAN, WLAN, Ethernet, Powerline) - to communicate directly with the data terminal (DEE1) over the reception means (EEH) and the control means (STEH).

15. Arrangement according to claim 14, which is configured for performing the process steps according to any one of the method claims I to 11.

## Revendications

1. Procédé pour l'identification et/ou l'adressage d'un terminal de données (DEE1) d'un réseau local (LAN, W-LAN, Ethernet, Powerline), selon lequel le réseau local (LAN, W-LAN, Ethernet, Powerline) est couplé par l'intermédiaire d'un dispositif de transmission de données (DÜE) à un réseau étendu (WAN, MAN, INTERNET) et au moins deux terminaux de données (DEE1, DEE2) du réseau local (LAN, W-LAN, Ethernet, Powerline) en tant que « Clients » sont reliés par l'intermédiaire du dispositif de transmission de données (DÜE) à un système terminal (ESY) associé au réseau étendu (WAN, MAN, INTERNET) en tant que « Serveur », le procédé comportant les étapes suivantes :
a) au moins un premier terminal de données (DEE1) transmet, en raison d'un événement déclencheur (ALE), des premières informations d'identification/adressage (AID-INF1), existantes ou formées au moyen d'une adresse IP source (Q-IP : 134.134.134.134) du dispositif de transmission de données (DÜE), renvoyant au réseau local (LAN, W-LAN, Ethernet, Powerline) et sur le réseau étendu (WAN, MAN, INTERNET), au système terminal (ESY), qui mémorise les informations d'identification / adressage transmises (AID-INF1),
b) un deuxième terminal de données (DEE2) transmet des deuxièmes informations d'identification / adressage (AID-INF2), existantes ou formées au moyen d'une adresse IP source (Q-IP : 134.134.134.134) du dispositif de transmission de données (DÜE), renvoyant au réseau étendu (WAN, MAN, INTERNET), au système terminal (ESY), avec lesquelles le système terminal (ESY) est informé de déterminer des troisièmes informations d'identification/adressage transmises (AID-INF3) pour le réseau local (LAN, W-LAN, Ethernet, Powerline) et de transmettre celles-ci au deuxième terminal de données (DEE2),
c) pour la détermination des troisièmes informations d'identification / adressage (AID-INF3), le système terminal (ESY) compare les deuxièmes informations d'identification / adressage reçues (AID-INF2) aux premières informations d'identification / adressage mémorisées (AID-INF1),
d) lorsque la comparaison indique qu'il existe pour les deuxièmes informations d'identification / adressage (AID-INF2) une partie correspondante des premières informations d'identification / adressage mémorisées (AID-INF1), le système terminal (ESY) transmet comme troisièmes informations d'identification / adressage à déterminer (AID-INF3) au deuxième terminal de données (DEE2) la partie des premières informations d'identification / adressage (AID-INF1) qui renvoie au réseau local (LAN, W-LAN, Ethernet, Powerline),
e) avec la partie des premières informations d'identification / adressage (AID-INF1) transmise comme troisièmes informations d'identification / adressage (AID-INF3), le deuxième terminal de données (DEE2) est en mesure de communiquer directement avec le premier terminal de données (DEE1).

2. Procédé selon la revendication 1, **caractérisé en ce que** l'événement déclencheur (ALE) est déterminé par un enregistrement initial du premier terminal de données (DEE1) dans le réseau local (LAN, W-LAN, Ethernet, Powerline) auprès du système terminal (ESY).

3. Procédé selon la revendication 1 ou 2, **caractérisé en ce que** l'événement déclencheur (ALE) est déterminé par un intervalle temporel de répétition au cours d'une mise à jour d'enregistrement du premier terminal de données (DEE1) dans le réseau local (LAN, W-LAN, Ethernet, Powerline) auprès du système terminal (ESY).

4. Procédé selon la revendication 1, 2 ou 3, **caractérisé en ce que** l'événement déclencheur (ALE) est déterminé par la modification des premières informations d'identification / adressage (AID-INF1).

5. Procédé selon la revendication 1, **caractérisé en ce que** des adresses de Protocole Internet sous forme d'adresses source / destination et des données d'authentification sont utilisées en tant que premières à troisièmes informations d'identification / adressage (AID-TNF1, AID-INF2, AID-INF3).

6. Procédé selon la revendication 5, **caractérisé en ce que** un mot de passe, un nom d'utilisateur ou une adresse MAC sont utilisé en tant que premières à troisièmes informations d'identification / adressage (AID-INF1, AID-INF2, AID-INF3).

7. Procédé selon la revendication 1, **caractérisé en ce que** le réseau local (LAN, W-LAN, Ethernet, Powerline) est construit sans fil.

8. Procédé selon la revendication 7, **caractérisé en ce qu'**une partie fixe sans fil avec fonctionnalité de routeur est utilisée comme dispositif de transmission de données (DÜE).

9. Procédé selon la revendication 1, **caractérisé en ce que** le réseau local (LAN, W-LAN, Ethernet, Powerline) est construit à partir de lignes.

10. Procédé selon la revendication 9, **caractérisé en ce que**, pour la construction liée à des lignes, une « Passerelle Domestique » est utilisée comme dispositif de transmission de données (DÜE).

11. Procédé selon la revendication 1, **caractérisé en ce que** un serveur Web avec une base de données spécifique à l'utilisateur dans le réseau étendu (WAN, MAN, INTERNET) conçu comme Internet est utilisé comme système terminal (ESY).

12. Système terminal (ESY) pour l'identification et/ou l'adressage d'un terminal de données (DEE1) d'un réseau local (LAN, W-LAN, Ethernet, Powerline) avec une interface de DÜE (D-SS) vers un dispositif de transmission de données (DÜE) du réseau local (LAN, W-LAN, Ethernet, Powerline), le système terminal (ESY) associé à un réseau étendu (WAN, MAN, INTERNET) et conçu comme « Serveur » pouvant être relié par l'intermédiaire de l'interface de DÜE (D-SS) et du dispositif de transmission de données (DÜE) à au moins deux terminaux de données (DEE1, DEE2), conçus comme « Clients », du réseau local (LAN, W-LAN, Ethernet, Powerline),
a) dans lequel sont présents un dispositif récepteur (EE) de l'interface de DÜE (D-SS) ainsi qu'un dispositif de commande (STE) avec des moyens de mémorisation (SPM) associés, lesquels sont conçus et sont reliés entre eux de telle sorte que
a1) des premières informations d'identification/adressage (AID-INF1) existantes ou formées au moyen d'une adresse source IP (Q-IP : 134.134.134.134) du dispositif de transmission de données (DÜE), renvoyant au réseau local (LAN, W-LAN, Ethernet, Powerline) et sur le réseau étendu (WAN, MAN, INTERNET) et émises par un premier terminal de données (DEE1) en raison d'un événement déclencheur (ALE) sont reçues et mémorisées dans les moyens de mémorisation (SPM), et
a2) des deuxièmes informations d'identification / adressage (AID-INF2) existantes ou formées au moyen d'une adresse source IP (Q-IP : 134.134.134.134) du dispositif de transmission de données (DÜE), renvoyant au réseau étendu (WAN, MAN, INTERNET) et émises par un deuxième terminal de données (DEE2) sont reçues et mémorisées stockées temporairement dans les moyens de mémorisation (SPM) pour la détermination de troisièmes informations d'identification / adressage (AID-INF3) pour le réseau local (LAN, W-LAN, Ethernet, Powerline) et pour la transmission de celles-ci au deuxième terminal de données (DEE2),
b) dans lequel sont présents, pour la détermination des troisièmes informations d'identification / adressage (AID-INF3), un dispositif émetteur (SE) de l'interface de DÜE (D-SS) ainsi que le dispositif de commande (STE) avec les moyens de mémorisation (SPM) et les moyens de comparaison (VGM) associés, lesquels sont conçus et reliés les uns aux autres de telle sorte que
b1) les deuxièmes informations d'identification/adressage reçues et stockées temporairement (AID-INF2) sont comparées aux premières informations d'identification / adressage mémorisées (AID-INF1),
b2) lorsque la comparaison indique qu'il existe pour les deuxièmes informations d'identification / adressage (AID-INF2) une partie correspondante des premières informations d'identification / adressage mémorisées (A1D-INF1), la partie des premières informations d'identification / adressage (AID-INF1) qui renvoie au réseau local (LAN, W-LAN, Ethernet, Powerline) est transmise comme troisièmes informations d'identification / adressage à déterminer (AID-INF3) au deuxième terminal de données (DEE2) pour que celui-ci soit en mesure de communiquer directement avec le premier terminal de données (DEE1),

13. Système terminal (ESY) pour l'identification et/ou l'adressage d'un terminal de données (DEE1) d'un réseau local (LAN, W-LAN, Ethernet, Powerline) selon la revendication 12, qui est conçu pour la mise en oeuvre des étapes de procédé selon l'une des revendications de procédé 1 à 11.

14. Installation pour l'identification et/ou l'adressage d'un terminal de données (DEE1) d'un réseau local (LAN, W-LAN, Ethernet, Powerline), qui comporte le réseau local (LAN, W-LAN, Ethernet, Powerline), ledit terminal de données (DEE1) étant relié au moyen d'une interface DÜE/DEE2 (DD-SS) à un dispositif de transmission de données (DÜE) et à un autre terminal de données (DEE2) du réseau local (LAN, W-LAN, Ethernet, Powerline), le terminal de données (DEE1) conçu comme « Client » étant relié par l'intermédiaire de l'interface DÜE/DEE2 (DD-SS) à l'autre terminal de données (DEE2), conçu comme « Client », du réseau local (LAN, W-LAN, Ethernet, Powerline) ainsi que par l'intermédiaire de l'interface DÜE/DEE2 (DD-SS) et du dispositif de transmission de données (DÜE) à un système terminal (ESY), conçu comme « Serveur », de l'installation,
le système terminal (ESY) étant associé à un réseau étendu (WAN, MAN, INTERNET),
une unité émettrice (SEH) et une unité réceptrice (EEH) de l'interface DÜE/DEE2 (DD-SS) ainsi qu'une unité de commande (STEH) avec des moyens déclencheurs (ALM) et des moyens de mémorisation d'informations (ISPM) associés ainsi qu'avec un module de mémoire permanente (FSPM) associé étant présentes, qui sont conçues et reliées les unes aux autres de telle sorte que, en raison d'un événement déclencheur (ALE) constaté par les moyens déclencheurs (ALM), des premières informations d'identification/adressage (AID-INF1), existantes ou formées au moyen d'une adresse IP source (Q-IP : 134.134.134.134) du dispositif de transmission de données (DÜE), renvoyant au réseau local (LAN, W-LAN, Ethernet, Powerline) et sur le réseau étendu (WAN, MAN, INTERNET) et mémorisées dans les moyens de mémorisation d'informations (ISPM) sont envoyées au système terminal (ESY) adressable via des données « d'adresse universelle URL » mémorisées dans le module de mémoire permanente (FSPM) pour que l'autre terminal de données (DEE2) - après que celui-ci a envoyé pour sa part des deuxièmes informations d'identification / adressage (AID-INF2), existantes ou formées au moyen d'une adresse IP source (Q-IP : 134.134.134.134) du dispositif de transmission de données (DÜE) et renvoyant au réseau étendu (WAN, MAN, INTERNET), au système terminal (ESY) et a reçu en retour suite à une comparaison entre les premières informations d'identification/adressage (AID-INF1) et les deuxièmes informations d'identification/adressage (AID-INF2) des troisièmes informations d'identification / adressage (AID-INF3) comme partie, renvoyant au réseau local (LAN, W-LAN, Ethernet, Powerline), des premières informations d'identification/adressage (AID-INF1) - soit en mesure de communiquer directement par l'intermédiaire de l'unité réceptrice (EEH) et de l'unité de commande (STEH) avec le terminal de données (DEE1).

15. Installation selon la revendication 14, qui est conçue pour la mise en oeuvre des étapes de procédé selon l'une des revendications de procédé 1 à 11.
